## Europäisches Patentamt
## European Patent Office
## Office européen des brevets

(19)

(11) Veröffentlichungsnummer: **0 043 985**
**B1**

(12) # EUROPÄISCHE PATENTSCHRIFT

(45) Veröffentlichungstag der Patentschrift:
**03.10.84**

(51) Int. Cl.³: **C 08 L 83/04,** C 08 J 3/02

(21) Anmeldenummer: **81105091.3**

(22) Anmeldetag: **01.07.81**

(54) **Polysiloxan-Emulsionen mit verbesserter Kältestabilität.**

(30) Priorität: **12.07.80 DE 3026501**

(43) Veröffentlichungstag der Anmeldung:
**20.01.82 Patentblatt 82/3**

(45) Bekanntmachung des Hinweises auf die Patenterteilung:
**03.10.84 Patentblatt 84/40**

(84) Benannte Vertragsstaaten:
**BE DE FR GB IT NL**

(56) Entgegenhaltungen:
**DE - A - 1 469 385**
**DE - A - 2 614 816**
**FR - A - 1 273 580**
**FR - A - 1 299 236**
**FR - A - 1 565 387**
**FR - A - 2 096 591**
**US - A - 4 012 355**

(73) Patentinhaber: **BAYER AG, Konzernverwaltung RP Patentabteilung, D-5090 Leverkusen 1 Bayerwerk (DE)**

(72) Erfinder: **Steinbach, Hans-Horst, Dr., Im Birkelshof 1, D-5060 Bergisch Gladbach 2 (DE)**
Erfinder: **Schnurrbusch, Karl, Dr., Kurt-Schumacher-Ring 154, D-5090 Leverkusen 1 (DE)**
Erfinder: **Rieder, Matthias, Beienburger Strasse 22, D-5064 Rösrath (DE)**
Erfinder: **Weiden, Otto, Am Märchen 39, D-5090 Leverkusen 1 (DE)**

## Beschreibung

Die vorliegende Erfindung betrifft wässrige Polysiloxan-Emulsionen, die Si-H-Bindungen aufweisende Siliconöle enthalten, mit verbesserter Kältestabilität. Es gelingt damit, insbesondere bei Temperaturen unter dem Gefrierpunkt, die Stabilität zu erhöhen und die bei Polymethylhydrogensiloxanen bekannte hydrolytische Wasserstoffabspaltung zu unterdrücken.

Wässrige Emulsionen von Organopolysiloxanen, die auch Alkylwasserstoffpolysiloxane enthalten, finden seit längerem vielfältige Verwendung, insbesondere zur Imprägnierung von Fasermaterial aller Art, wobei sie auch oft mit Knitterfestmitteln kombiniert werden. Man pflegt Texitilien damit zu tränken und diese anschliessend zu erhitzen, um ihnen eine wasserabweisende Oberfläche zu geben, wobei die Reaktionsfähigkeit der SiH-Gruppe die Dauerhaftigkeit der Imprägnierung fördert (vgl. z.B. Hydrophobierung von Textilien v. P. Selinger, Textilpraxis International 1975, Heft 6 u. 8, Seiten 732–739 und 992–998. Untersuchungen über die Hydrophobierung von Textilien mit Siliconen von O. Glenz, Melliand Textilberichte 41-9/1960, Seiten 1125 bis 1129).

Diese Reaktionsfähigkeit macht es aber – wegen Wasserstoffentwicklung – und damit einhergehender Entmischung schwierig, solche Emulsionen zu lagern und über längere Wege zu befördern.

Aus FR-A 15 65 387 sind Emulgatoren für Siliconemulsionen verschiedenster Art bekannt. Dabei können neben den eigentlichen Emulgatoren noch organische Lösungsmittel, wie z.B. Alkohole, mitverwendet werden. Das erfindungsgemäss gelöste Problem wird dabei aber gar nicht angesprochen und die Zusätze auch nicht in der erfindungsgemässen Kombination angewandt.

Es ist bekannt, diese Nachteile zu verringern, indem man Alkylwasserstoffpolysiloxan-Emulsionen unter Verwendung spezifischer Emulgatoren herstellt und/oder Schutzkolloide zugibt. Derartige Emulgatoren können quartäre Alkylammoniumsalze und/oder Perfluorlakylgruppen enthaltende Tenside sein. Als Schutzkolloid wird häufig Polyvinylalkohol verwendet. Die Herstellung derartiger Emulsionen erfolgt vorzugsweise im sauren pH-Bereich (vgl. z.B. DE-PS 2 701 724 und Melliand Textilberichte 41-9/1960, Seiten 1125-1129).

Auf die beschriebene Weise kann die Wasserstoff-Abspaltung in gewissem Umfang unterdrückt und so die Lagerstabilität bei Raumtemperatur erhöht werden. Bei Temperaturen unter dem Gefrierpunkt, wie sie im Winterversand häufig auftreten, erweisen sich derartige Emulsionen aber als relativ instabil.

Gegenstand der vorliegenden Erfindung sind nun stabile wässrige Alkylwasserstoffpolysiloxan-Emulsionen, welche dadurch gekennzeichnet sind, dass sie etwa 0,1 bis 0,8 Gew.-% eines einwertigen Alkohols mit 1 oder 2 C-Atomen oder zweiwertigen Alkohols und 0,5–2 Gew.% eines dreiwertigen Alkohols enthalten.

Es hat sich überraschenderweise gezeigt, dass durch die Zugabe dieser Alkoholmenge zu Alkylwasserstoffpolysiloxan-Emulsionen eine über die Wirkung der bekannten Zusätze hinausgehende Stabilisierung erreicht wird. Dabei zeigen diese Emulsionen ausgezeichnete Beständigkeit bei Raum- und höherer Temperatur sowie bei Temperaturen unterhalb des Gefrierpunktes, d.h. derartige Emulsionen können ohne Schädigung eingefroren und wieder aufgetaut werden. Überraschenderweise wurde gefunden, dass trotz des Zusatzes von mehrwertigen Alkoholen zu den beschriebenen Emulsionen hervorragende Hydrophobeffekte bei der Imprägnierung von Textilfasern erhalten werden. Dies ist deshalb überraschen, weil hydrophilierende Zusätze, wie beispielsweise Emulgatoren, bekanntermassen die Hydrophobeigenschaften derartiger Emulsionen verschlechtern.

Mit Hilfe der vorliegenden Erfindung gelingt es, Alkylwasserstoffpolysiloxan-Emulsionen herzustellen, die bei Temperaturen in einem Bereich von ca. 50°C bis −20°C eine ausgezeichnete Stabilität zeigen.

Als Alkohole eignen sich einwertige Alkohole der allgemeinen Formel

$$C_nH_{2n+1}OH \ (n=1 \ oder \ 2),$$

die besonders kälte- und gasungsstabilisierend wirken. Geeignete mehrwertige Alkohole sind solche mit 2 oder mehr OH-Gruppen. Bevorzugt sind dabei Ethylenglykol und/oder Glycerin.

Ausgezeichnet kältestabile Emulsionen werden erhalten, wenn man zu den beschriebenen Emulsionen ein Alkohol-Gemisch zugibt, bestehend z.B. aus

0,5–2 Gew.-%, vorzugsweise 1 Gew.-% Glycerin und 0,1–0,8 Gew.-%, vorzugsweise 0,5 Gew.-% Ethanol

oder

bestehend aus

0,1–0,8 Gew.-%, vorzugsweise 0,5 Gew.-% Ethylenglycol und 0,5–2,0 Gew.-%, vorzugweise 1 Gew.-% Glycerin.

Emulsionen der beschriebenen Art werden oft in wässrig verdünnten Flotten zum Einsatz gebracht. Es hat sich gezeigt, dass derartig hergestellte Emulsionverdünnungen durch Zusatz mehrwertiger Alkohole eine erhöhte Stabilität gegenüber Lösungsgenossen, besonders Salzen, aufweisen.

Die zu emulgierenden Siloxanöle, meist Gemische von üblichen Diorganosiloxanpolymeren und Alkylwasserstoffpolysiloxanen, wie z.B. Methylwasserstoffpolysiloxanen, denen auch noch organische Lösungsmittel wie z.B. Toluol oder Brombenzol zugefügt sein können, sollen Viskositäten zwischen 5 m Pa.s (cP) und 500 (cP) m Pa.s (20°C) haben. Die Mengenverhältnisse sollen so gewählt werden, dass die Summe der Organopolysiloxane insgesamt etwa bis 40 Gew.-% der lagerfähigen Emulsion beträgt.

Für die erfindungsgemässen Emulsionen geeignete Emulgatoren sind bekannterweise z.B. quartäre Alkylammoniumsalze oder Perfluoralkylgruppen enthaltende Tenside.

Die Herstellung der Emulsionen erfolgt in handelsüblichen Homogenisiermaschinen.

Die vorliegende Erfindung soll anhand der folgenden Beispiele noch näher erläutert werden:

Beispiel 1

Man gibt 80 Gew.-Teile Polymethylwasserstoffsiloxan (Viskosität = 17 mm²s⁻¹ bei 20°C) zu einer Mischung bestehend aus 7 Gew.-Teilen Dodecyldimethylbenzylammoniumchlorid, 2 Gew.-Teilen Glycerin, 1 Gew.-Teil Ethylalkohol und 110 Gew.-Teilen Wasser, und emulgiert das Gesamtgemisch in einer dafür üblichen Vorrichtung (Druckemulgiermaschine).

Man erhält – nach Einstellung des pH-Wertes mittels Salzsäure auf einen Wert zwischen 3 und 4 – eine äusserst beständige Emulsion, die mit Zirkonseifen kombiniert oder als Vernetzungsmittel im Gemisch mit anderen Organopolysiloxanemulsionen verwendet werden kann.

Eine auf die beschriebene Weise hergestellte Emulsion (300 ml) entwickelte während 24 Stunden andauerndem intensivem Rühren bei 40°C nur 8 cm³ Wasserstoff.

Bei Temperaturen von −20°C die Emulsion im Rahmen eines Gefrier-Auftau-Zyklus (Gefrierdauer = 5×120 Stunden) eine ausgezeichnete Beständigkeit.

Beispiel 2 (Vergleich)

Eine Emulsion hergestellt nach Beispiel 1, ohne den Zusatz an Glycerin und Ethylalkohol zerfällt nach dem Auftauen der gefrorenen Emulsion in Öl und Wasser.

Beispiel 3

Ersetzt man in Beispiel 1 Ethylalkohol durch die anteilige Menge Ethylenglykol und verfährt wie in Beispiel 1 beschrieben, erhält man Produkte mit vergleichbaren kältestabilen Eigenschaften. Unter den gemäss Beispiel 1 beschriebenen Bedingungen entwickelt die Emulsion 9 cm³ Wasserstoff.

Beispiel 4

In Abwandlung der Emulsion in Beispiel 1 gibt man 35 Gew.-Teile Methylwasserstoffpolysiloxan (Viskosität 17 mm²s⁻¹ bei 20°C) zu einer Lösung, bestehend aus 0,5 Gew.-Teilen $C_8F_{17}SO_2N(CH_3)CO(OC_2H_4)_{30}-(OC_3H_6)_{30}-OC_4H_9$, 1 Gew.-Teil eines Polyoxyethylenalkylethers, 1 Gew.-Teil Glycerin und 0,5 Gew.-Teile Ethylenglykol in 62 Gew.-Teile Wasser und emulgiert das Gesamtgemisch in einer üblichen Homogenisierungsvorrichtung (Druckemulgiermaschine). Man erhält eine Emulsion, die sich durch sehr gute Stabilität auszeichnet. Eine Wasserstoffentwicklung konnte nach 24stündigem Rühren bei 40°C nicht festgestellt werden. Bei Temperaturen von −20°C zeigt die Emulsion gemäss den unter Beispiel 1 beschriebenen Bedingungen eine ausgezeichnete Stabilität.

Beispiel 5

Ersetzt man in Beispiel 4 Glycerin und Ethylalkohol durch die anteilige Menge Isobutanol und verfährt wie in Beispiel 7 beschrieben, erhält man Produkte, die nicht die beschriebenen Eigenschaften zeigen.

**Patentansprüche**

1. Stabile wässrige Alkylwasserstoffpolysiloxan-Emulsion dadurch gekennzeichnet, dass sie etwa 0,1 bis 0,8 Gew.-% eines einwertigen Alkohols mit 1 oder 2 C-Atomen oder zweiwertigen Alkohols und 0,5–2 Gew.-% eines dreiwertigen Alkohols enthält.

2. Emulsion gemäss Anspruch 1, dadurch gekennzeichnet, dass sie 1 Gew.-% Glycerin und 0,5 Gew.-% Ethanol enthält.

3. Emulsion gemäss Anspruch 1, dadurch gekennzeichnet, dass sie 1 Gew.-% Glycerin und 0,5 Gew.-% Ethylenglykol enthält.

**Claims**

1. Stable aqueous alkylhydridopolysiloxane emulsion, characterised in that it contains about 0.1 to 0.8% by weight of a onohydric alcohol with 1 or 2 C atoms or of a dihydric alocohol and 0.5–2% by weight of a trihydric alcohol.

2. Emulsion according to Claim 1, characterised in that it contains 1% by weight of glycerol and 0.5% by weight of ethanol.

3. Emulsion according to Claim 1, characterised in that it contains 1% by weight of glycerol and 0.5% by weight of ethylene glycol.

**Revendications**

1. Emulsion aqueuse stable d'alkylhydrogénopolysiloxanes, caractérisée en ce qu'elle contient environ 0,1 à 0,8% en poids d'un alcool monovalent ayant 1 ou 2 atomes de carbone ou d'un alcool divalent et 0,5 à 2% en poids d'un alcool trivalent.

2. Emulsion suivant la revendication 1, caractérisée en ce qu'elle contient 1% en poids de glycérine et 0,5% en poids d'éthanol.

3. Emulsion suivant la revendication 1, caractérisée en ce qu'elle contient 1% en poids de glycérine et 0,5% en poids d'éthylène-glycol.